# EUROPÄISCHE PATENTSCHRIFT

(11) **EP 1 388 674 B1**
(45) Veröffentlichungstag und Bekanntmachung des Hinweises auf die Patenterteilung: **08.11.2006**
(21) Anmeldenummer: 03102411.0
(22) Anmeldetag: 04.08.2003
(51) Int. Cl.: F16B 2/12

(54) **Haltevorrichtung für ein Leitungsstrang-Schuhelement**
Retaining device for the shoe of a pipe line
Dispositif de fixation d'un sabot de ligne de conduite

(30) Priorität: 08.08.2002 DE 10236550
(43) Veröffentlichungstag der Anmeldung: 11.02.2004
(73) Patentinhaber: HILTI Aktiengesellschaft, 9494 Schaan (LI)
(72) Erfinder: Mirsberger, Helmut, 81377 München (DE); Birnbaum, Ulrich, 86929 Penzing (DE)
(74) Vertreter: Wildi, Roland

(56) Entgegenhaltungen:
- EP-A- 0 456 851
- EP-A- 1 043 532
- DE-U- 29 922 212

## Beschreibung

### Technisches Gebiet

Die Erfindung betrifft eine Haltevorrichtung für die Befestigung eines Leitungsstrang-Schuhelements mit einer Auflageplatte für Leitungsstrang-Installationen, wie Installationen von Rohrleitungen und dergleichen, auf einem Träger, insbesondere auf einem Systemträger eines Montagesystems. Die Haltevorrichtung umfasst zumindest zwei Klauenelemente, Niederhalteelemente und zumindest ein Befestigungsmittel. Jedes Klauenelement umfasst ein Klauenteil zum Umgreifen eines Trägerrandes, ein, an das Klauenteil angrenzendes, Auflageteil zur Auflage des Klauenelements auf einer der Aussenseiten des Trägers und einen, im Wesentlichen senkrecht zum Auflageteil ausgerichteten Flanschabschnitt, der eine Öffnung zur Fixierung der Klauenelemente am Träger mittels eines Befestigungsmittels aufweist. Die Niederhalteelemente sind als separate Teile ausgebildet und weisen jeweils ein Niederhalteteil auf. Die Niederhalteelemente sind am Flanschabschnitt des Klauenelements zum Niederhalten der Auflageplatte auf eine der Aussenseiten des Trägers angeordnet.

### Stand der Technik

Im industriellen Leitungsstrangbau werden beispielsweise Rohrleitungen auf Rahmenkonstruktionen aus Stahl abgestützt. Die Rahmenkonstruktion wird aus Profilträgern oder Systemträgem eines Montagesystems erstellt. Damit die Rohrleitungen an den Rahmenkonstruktionen gehalten werden, sind sogenannte Rohrhalter bekannt, die eine Rohrschelle zum Umfassen der Rohrleitung und eine Auflageplatte, auch Rohrschuh genannt, umfassen. Diese Rohrhalter sind an einem, zumeist dem horizontalen Träger der Rahmenkonstruktion, gegen Bewegungen des Rohrschuhs senkrecht vom Träger und Bewegungen quer zur Rohrleitungsachse befestigt.

Die Auflageplatte wird beispielsweise mittels Z- oder L-förmigen Schweisslaschen geführt gehalten, die direkt an einem Profilträger angeschweisst sind. Eine andere Möglichkeit stellen Klauenelemente dar, die an einem Rand des Trägerflansches angeordnet sind und mit einem nasenartig ausgebildeten Vorsprung die Auflageplatte an dem Profilträger geführt halten.

Aus der EP 1 043 532 A2 ist eine derartige Rohrhalterung mit zumindest zwei Klauenelementen bekannt, an denen Abhebesicherungen in Form von nasenartigen Vorsprüngen vorgesehen sind. Die Abhebesicherungen sind entweder direkt an den Haltebacken ausgeformt oder mittels Schweissen an den Haltebacken befestigt. Um eine Nut zwischen der Abhebesicherung und der Flanschoberfläche an die tatsächliche Geometrie der Auflageplatte anzupassen, können separate Ausgleichselemente vorgesehen werden oder die Abhebesicherung kann eine Bohrung mit einem eingesetzten Gewindezapfen aufweisen, in welchen ein Abstands- oder Gleitelement einschraubbar ist.

In der DE 196 53 538 C1 wird deshalb eine Rohrbefestigung vorgeschlagen, die eine Auflageplatte mit einem senkrecht zur Auflageplatte ausgerichteten Steg umfasst, wobei die Auflageplatte immer die gleiche Materialstärke aufweist. Mit nur auf diese Auflageplatte abgestimmten Klauenelementen wird die Befestigung der Auflageplatte am Träger vorgenommen. Die Rohrleitung wird von einer Rohrschelle umfasst, die auf einer, mit dem Steg verbindbaren Halteplatte angeordnet ist. Zur Einstellung der Höhe der Rohrleitung können der Steg und die Halteplatte zueinander verschoben und miteinander fixiert werden. Zur Schaffung einer form- und kraftschlüssigen Verbindung ist je eine Halteprofilierung an den beiden Teilen vorgesehen und die beiden Teile werden mit einer Schraube verspannt.

Nachteilig an den bekannten Lösungen ist, dass Schweissungen nur von spezialisierten Handwerkern erstellt werden dürfen und dass diese aufwändig in der Herstellung sind. Beispielsweise muss vor der Schweissung der Oberflächenschutz des Trägers im Bereich der zu erstellenden Verbindung entfernt und anschliessend die Schweissstelle gegen Korrosion geschützt werden. In explosionsgefährdeten Bereichen dürfen ohne ein aufwändiges Genehmigungsverfahren und zusätzlichen provisorischen, baulichen Massnahmen keine Schweissungen erstellt werden. Anpassungen und Änderungen an der Leitungsstrang-Befestigung sind bei geschweissten Verbindungen nur unter einem grossen Aufwand durchführbar.

Die DE 299 22 212 U1 zeigt eine Rohrhalterung für die Befestigung eines Leitungsstrang-Schuhelements mit einer Auflageplatte, bei der unterschiedlich ausgebildete, auswechselbare und genau auf die Ausbildung der Auflageplatte abgestimmte Niederhalteelemente von einem Klauenelement umfasst werden.

Klauenelemente haben den Nachteil, dass beispielsweise für die verschiedenen Rohrdurchmesser und/oder Auflageplatten sowie die unterschiedlichen Profilquerschnitte eine Vielzahl von, in der Herstellung kostenintensiven Teilen zur Verfügung gestellt werden müssen. Eine Kombination von gemäss der DE 196 53 538 C1 ausgebildeten Klauenelementen mit handelsüblichen Rohrschuhen ist nicht möglich. Da der Rohrschuh teils auf dem Träger gleiten können muss, werden in Abhängigkeit der Art der Lagerung Gleitunterlagen vorgesehen, z. B. aus Edelstahl oder Kunststoff, die zusätzlich auf die zu fixierende Dicke des Rohrschuhs Einfluss haben. Des Weiteren schreiben die verschiedenen Betreiber der Anlagen unterschiedliche Spaltmasse zwischen der Oberkante der Auflageplatte und dem Niederhalteabschnitt vor, so dass dieses Erfordernis ebenfalls zu weiteren Ausführungen von Klauenelementen führt. Für eine, bezogen auf die Rohrleitungsachse, links- bzw. rechtsseitige Montage der Elemente müssen zwei verschiedene Ausführungen der Klauenelemente bereitgestellt werden. Hinzu kommt eine aufwändige Planung da die Klauenelemente entsprechend der effektiven Masse einer Konstruktion zur Verfügung gestellt werden müssen.

### Darstellung der Erfindung

Der vorliegenden Erfindung liegt die Aufgabe zugrunde, eine Haltevorrichtung für die Befestigung von Leitungsstrang-Schuhelementen auf einem Träger zu schaffen, die für eine Vielzahl von verschiedenen Ausführungen solcher Schuhelementen verwendet werden kann und einfach herstellbar sowie montierbar ist.

Die Aufgabe ist durch die Merkmale des Anspruchs 1 gelöst. Gemäss der Erfindung umfasst eine Haltevorrichtung für die Befestigung eines Leitungsstrang-Schuhelements mit einer Auflageplatte für Leitungsstrang-Installationen, wie Installationen von Rohrleitungen und dergleichen, auf einem Träger, insbesondere auf einem Systemträger eines Montagesystems, zumindest zwei Klauenelemente, Niederhalteelemente und zumindest ein Befestigungsmittel. Jedes Klauenelement umfasst ein Klauenteil zum Umgreifen eines Trägerrandes, ein, an das Klauenteil angrenzendes, Auflageteil zur Auflage des Klauenelements auf einer der Aussenseiten des Trägers und einen, im Wesentlichen senkrecht zum Auflageteil ausgerichteten Flanschabschnitt, der eine Öffnung zur Fixierung der Klauenelemente am Träger mittels eines Befestigungsmittels aufweist. Die Niederhalteelemenente sind am Flanschabschnitt des Klauenelements zum Niederhalten der Auflageplatte auf eine der Aussenseiten des Trägers angeordnet. Die Niederhalteelemente sind als separate Teile ausgebildet, und weisen jeweils ein Niederhalteteil auf. Die Niederhalteelemente sind über zumindest ein Befestigungsmittel an den Flanschabschnitten der Klauenelemente gehalten. Der Niederhalteteil jeden Niederhalteelements ist im Abstand zur Aussenseite des Trägers einstellbar.

Die Klauenelemente sind vorzugsweise als Standardelemente für verschiedene Profilträger ausgebildet. Die Länge des Flanschabschnitts der Klauenelemente ist derart gewählt, dass in Kombination mit dem am Flanschabschnitt angeordneten Niederhalteelement die üblichen Stärken von Auflageplatten für Leitungsstrang-Installationen an dem Profilträger gehalten werden können. Zwei gegeneinander ausgerichtete, an den Flanschrändern des Trägers angeordnete Klauenelemente werden beispielsweise mit einer, durch die Öffnung der Flanschabschnitte hindurchgeführte Gewindestange, die an deren Enden jeweils eine Mutter aufweist, verbunden und mittels den Muttern am Träger verspannt. Mit der Länge der Gewindestange wird die maximale Trägerbreite bestimmt, an welcher die Haltevorrichtung angeordnet werden kann.

Die Niederhalteelemente sind beispielsweise U-förmig ausgebildet und werden auf die Flanche aufgesteckt. In zumindest einem der Schenkel der U-förmigen Niederhalteelemente ist beispielsweise eine Spannschraube angeordnet, mit der die Niederhalteelemente an den Klauenelementen verspannt werden kann. Anstelle einer Spannschraube ist zumindest ein Teil der Niederhalteelemente clipartig ausgebildet, so dass die Niederhalteelemente beim Aufstecken auf die Flanschabschnitte der Klauenelemente an diesen gehalten sind. Vorzugsweise ist bei einer solchen Ausführungsform der Haltevorrichtung an zumindest einem Schenkel der Niederhalteelemente ein Eingreifmittel vorgesehen, das in zumindest einer Vertiefung an den Flanschabschnitten eingreift. Beispielsweise ist das Eingreifmittel ein Vorsprung, der in eine im Wesentlichen komplementär zu dem Vorsprung ausgebildete Nut eingreifen kann.

Damit mit einer Ausführung eines Niederhalteelements mehrere Stärken von Auflageplatten mit unterschiedlichen Spaltmassen am Träger befestigbar sind, ist der Niederhalteabschnitt des Niederhalteelements in der Höhe einstellbar ausgebildet. Beispielsweise umfasst der Niederhalteabschnitt einen, vom Flanschabschnitt sich erstreckenden Materialabschnitt, in dem eine im Wesentlichen senkrecht auf die Auflageplatte wirkende Einstellschraube angeordnet ist. Wenn das Niederhalteelement an dem Flanschabschnitt des Klauenelements befestigt ist, kann mit der Einstellschraube die Auflageplatte fixiert werden. Bevorzugt ist z. B. das linksseitig der Rohrachse angeordnete Niederhalteelement versetzt zu dem rechtsseitig angeordneten Niederhalteelement angeordnet.

Es ist weiter denkbar die Haltevorrichtung mit zwei Klauenelementen und zwei Niederhalteelementen zur Sicherung der Auflageplatte gegen das Abheben vom Träger zu verwenden. Insbesondere bei hohen auftretenden Belastungen auf die Niederhalteelemente, werden mehr als ein Niederhalteelement pro Seite der Auflageplatte zur Abhebesicherung vorgesehen.

Sollen zwei parallel zueinander verlaufende Rohrleitungen an dem Träger fixiert werden, können zwischen den Auflageplatten dieser Rohrleitungen zwei Klauenelemente mit vier Niederhalteelementen versehen werden, wobei jeweils zwei Niederhalteelemente die eine und die andere Auflageplatte am Träger fixieren.

Vorzugsweise umfasst jedes Niederhalteelement ein Führungsmittel zur Führung des Niederhalteelements an den Flanschabschnitten der Klauenelemente. Mit dem Führungsmittel wird das Niederhalteelement beim Befestigen am Flanschabschnitt ausgerichtet. Damit wird die Montage der Haltevorrichtung vereinfacht und kann schneller, bei Gewährleistung der sicheren Verbindung ausgeführt werden. Beispielsweise ist an den Flanschabschnitten zumindest ein Vorsprung ausgebildet, der in eine entsprechende Ausnehmung der Niederhalteelemente eingreifen kann. Der Vorsprung ist beispielsweise als in Längsrichtung der Flanschabschnitte verlaufender Streifen ausgebildet, der in eine an den Niederhalteelementen ausgebildeten Längsnut eingreift.

Bevorzugt umfassen die Flanschabschnitte der Klauenelemente Rastmittel und die Niederhalteelemente Gegenrastmittel, die im montierten Zustand miteinander in Eingriff stehen. Die Rastmittel und die, mit den Rastmitteln in Eingriff stehenden Gegenrastmittel ergeben in Kombination mit dem Befestigungsmittel eine form- und kraftschlüssige Verbindung zwischen den beiden Elementen, so dass eine hohe Sicherheit gegen ein Versagen der erstellten Verbindung gegeben ist. Das in das Rastmittel eingreifende Gegenrastmittel der Niederhalteelemente verhindert ein unbeabsichtigtes Verrutschen der positionierten Niederhalteelemente, beispielsweise wenn infolge eines Abhebens des Leitungsstrangs von dem Träger Kräfte auf die Niederhalteelemente wirken.

Andererseits kann das mit dem Flanschabschnitt zu verspannende Niederhalteelement entsprechend der Stärke der Auflageplatte an dem Flanschabschnitt positioniert werden. Bei der zuvor beschriebenen U-förmigen Ausführung der Niederhalteelemente werden diese nur um die zur Fixierung der Auflageplatte benötigte Strecke über die Flanschabschnitte gesteckt. Mit der formschlüssigen Verbindung der ineinandergreifenden Rast- und Gegenrastmittel ist eine sichere Verbindung der Niederhalteelemente mit den Klauenelementen gewährleistet. Zur links- und rechtsseitigen Montage eines U-förmig ausgebildeten Niederhalteelements weisen die Schenkel bevorzugt an beiden, dem Flanschabschnitt zugewandten Flächen Gegenrastmittel auf, die in beidseitig des Flanschabschnitts angeordnete Rastmittel eingreifen können. Diese Ausbildung ist insbesondere bei einer clipartigen Verbindung zwischen dem Niederhalteelement und dem Klauenelement vorteilhaft.

Vorteilhafterweise umfassen die Rastmittel und/oder die Gegenrastmittel eine Zahnung, wobei die Zahnteilung der Zahnung vorzugsweise 2.0 mm beträgt. Mit dieser Teilung sind einzelne Rastschritte von 2 mm oder ein Mehrfaches davon möglich. Diese Ausbildung des Rastmittels deckt einen grossen Teil der handelsüblichen Ausführung von Leitungsstrang-Schuhelementen ab. Die Zahnung ist bevorzugt auf den gewünschten Verstellraster und die vorhandene Lasteinwirkung abgestimmt. Dadurch ergeben sich z. B. die erforderliche Anzahl der in Eingriff stehenden Zähne der Zahnung des Rast- und Gegenrastmittels, die Geometrie, die Breite sowie die Tiefe der angeordneten Zahnung. Ist beispielsweise eine feinere Abstufung des sich aus dem Rast- und Gegenrastmittel ergebenden Rasters erwünscht, kann die Zahnteilung der Rast- und Gegenrastmittel verkleinert werden. Bei grossen Lasten kann die Zahnteilung der Rast- und Gegenrastmittel z. B. auch vergrössert und mit einer tieferen Ausgestaltung der Zahnung ausgebildet werden. Beispielsweise handelt es sich bei dem Rastmittel um eine sogenannte Prismenzahnung. Weitere Möglichkeiten zur Ausbildung des Rastmittels stellen beabstandete Vertiefungen dar, wie z. B. Nuten oder dergleichen.

Bevorzugt weisen die Niederhalteelemente jeweils eine Öffnung zur Fixierung der Niederhalteelemente mittels Befestigungsmittel an den Flanschabschnitten auf, wobei zur Fixierung der zumindest zwei Klauenelemente am Träger und der Niederhalteelemente jeweils an einem der Flanschabschnitte der Klauenelemente ein Befestigungsmittel, optional ein Schraubmittel, vorgesehen ist. Bei dieser Ausführungsform ist die Anzahl der einzelnen Bestandteile der erfindungsgemässen Haltevorrichtung reduziert und die Montage vereinfacht. Beim Verspannen des Befestigungsmittels werden die Klauenelemente sowie die Niederhalteelemente gleichzeitig fixiert.

Weiter kann das Niederhalteelement um die Längsachse des Befestigungsmittels geschwenkt werden, womit verschiedene Auflageplatten, die beispielsweise unterschiedliche Materialstärken aufweisen, mit ein und demselben Niederhalteelement am Träger fixiert werden. In einer weiteren Ausführung der Haltevorrichtung weist das Niederhalteelement z. B. einen kreisförmigen Anschlussteil auf, an dessen Kontaktfläche zum Flanschabschnitt eine vom Zentrum der Öffnung für das Befestigungsmittel nach aussen gerichtetes, strahlenartig ausgebildetes Gegenrastmittel ausgeformt ist. Das an dem Flanschabschnitt vorhandene Rastmittel ist vorzugsweise analog zum Gegenrastmittel ebenfalls strahlenförmig ausgebildet. Stehen die Rast- und Gegenrastmittel miteinander in Eingriff, ist eine formschlüssige Verbindung geschaffen, die ein unbeabsichtigtes Wegdrehen des Niederhalteelements infolge einer Krafteinwirkung durch Bewegungen der Auflageplatte verhindert. Vorzugsweise weisen die Flanschabschnitte der Klauenelemente oder die Niederhalteelemente zumindest ein Langloch auf, wobei das Langloch im vormontierten Zustand der Haltevorrichtung verlauft.

Mit dem Langloch kann das Niederhalteelement über dessen Länge entlang des Flanschabschnitts vorschoben und bezogen auf die am Träger zu fixierende Auflageplatte positioniert werden.

Bevorzugt weist ein Flächenbereich, der das zumindest eine Langloch umgibt, Rastmittel auf, wobei die Rastmittel parallel zueinander, quer zum zumindest einen Langloch verlaufen. Der Abstand der einzelnen Rastelemente des Rastmittels gibt die einzelnen, möglichen Verstellschritte für das Niederhalteelement vor. Wirkt eine senkrecht zur Auflageplatte wirkende Kraft auf das Niederhalteelement, ist mit dem quer zum Langloch ausgerichtete Rastmittel ein hohe Sicherheit der Verbindung gegen ein Versagen gegeben.

Vorteilhafterweise umfassen die Niederhalteelemente zusätzlich Rastmittel, wobei die Rastmittel auf der Seite des Niederhalteelements vorgesehen sind, die der Seite mit dem Gegenrastmittel des Niederhalteelements gegenüberliegt. Einerseits wird damit eine beidseitig an dem Niederhalteelementen angreifende, formschlüssige Verbindungsmöglichkeit geschaffen. Andererseits sind die Niederhalteelemente für eine links- sowie rechtsseitige Installation bezüglich der Rohrachse und der Trägerachse verwendbar.

Bevorzugt umfasst das Befestigungselement zur Fixierung der Haltevorrichtung an einem Träger ein Schraubmittel mit einem Hintergreifteil, wobei das Hintergreifteil ein Gegenrastmittel aufweist, wobei das Gegenrastmittel optional eine Zahnung umfasst. Das Hintergreifteil ist beispielsweise eine separate Metallplatte, die das mit dem Rastmittel des Niederhalteelements korrespondierende Gegenrastmittel aufweist. Das Hintergreifteil kann des Weiteren eine Unterlagsscheibe oder ein Schraubenkopf sein, an welchem das Gegenrastmittel direkt ausgebildet ist. Bevorzugt steht das Hintergreifteil mit dem Schraubmittel verdrehsicher in Eingriff oder ist mit diesem fest, beispielsweise unlösbar verbunden. Durch das Ineinandergreifen der Rastmittel mit den Gegenrastmitteln ist das Schraubmittel beim Verspannen desselben verdrehsicher gehalten. Zur Führung des Schraubmittels beim Setzen in die Öffnungen der Niederhalteelemente können an dem Schraubmittel Führungsflächen vorgesehen werden, die eine vordefinierte Führung des Schraubmittels bereits beim Setzvorgang ermöglichen. Beispielsweise sind die Öffnungen in den Niederhalteelementen als Vierkant-Löcher ausgebildet. Das Schraubmittel weist als Führungsflächen bevorzugt Planflächen auf, die auf diese Vierkant-Löcher in den Niederhalteelementen abgestimmt sind. Die Breite der an den Flanschabschnitten der Klauenelemente vorgesehenen Langlöchern, entspricht bei dieser Ausführungsform vorzugsweise der lichten Weite der Vierkant-Löcher, so dass die Führungsflächen auch an den Seitenrändem des Langlochs geführt werden.

Bevorzugt ist das Befestigungselement zur Erzeugung einer Vorspannung auf die zu verbindenden Teile der Haltevorrichtung federbeaufschlagt. Das Schraubmittel des Befestigungselements weist ein- oder beidseitig einen Schraubenkopf auf. Zumindest ein Federelement ist vorzugsweise zwischen einer Mutter und der Seite des Niederhalteelements am Schraubmittel angeordnet. Das Federelement ist beispielsweise eine Spiralfeder, eine Blattfeder, eine konisch gewickelte Feder oder dergleichen. Sind die Klauenelemente und Niederhalteelemente der Haltevorrichtung mit nur einem Befestigungselement miteinander verbunden, weist das Befestigungselement vorzugsweise an beiden Enden je ein Federelement auf. Die einzelnen Teile der Haltevorrichtung werden verlustsicher vormontiert und dem Anwender in dieser Form zur weiteren Verwendung zugeführt. Zur Anordnung der Haltevorrichtung werden die Klauenelemente gegen die Federkraft auseinandergezogen und an der gewünschten Stelle am Träger durch Loslassen der Klauenelemente am Träger gehalten. Durch Druck und/oder Zug am Schraubenschaft können die Niederhalteelemente von den Flanschabschnitten der Klauenelemente distanziert und entlang diesen positioniert werden, ohne dass die Niederhalteelemente eine allfällig vorhandene Führung verlassen. Sobald die Positionierung der einzelnen Elemente abgeschlossen ist, wird durch Verspannen des Befestigungselements mittels den Schraubenköpfen und/oder Muttern die Haltevorrichtung am Träger fixiert und die Auflageplatte des Rohrschuhs ist am Träger mittels der Haltevorrichtung gehalten.

In einer Variante dazu werden die einzelnen Bestandteile der Haltevorrichtung als lose Einzelteile der Verwendung zugeführt. Die Klauenelemente werden grob am Träger positioniert und das Befestigungselement wird durch die Öffnungen der an den Klauenelementen gehaltenen Niederhalteelemente und durch die Öffnungen der Klauenelemente hindurchgeführt. An zumindest einem freien Ende des Befestigungselements wird das Federelement vor dem Anordnen der Mutter zur Verspannung des Befestigungselements angeordnet. Vor der endgültigen Fixierung der Haltevorrichtung kann durch Druck auf die Mutter das als Hintergreifteil ausgebildete und mit den Gegenrastmitteln versehene Element aus dem Rastmittel des Niederhalteelements gehoben wird. Mit einer einhändigen Bewegung kann das Niederhalteelement umpositioniert werden. Durch Loslassen der Mutter des Befestigungselements rastet das Gegenrastmittel in das Rastmittel ein und das Niederhalteelement ist an dem Flanschabschnitt des Klauenelements gehalten.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Eine Längsansicht auf einen Träger mit einem ersten Ausführungsbeispiel der erfindungsgemässen Haltevorrichtung;
- Fig. 2: einen Querschnitt durch den Träger mit dem ersten Ausführungsbeispiel der erfindungsgemässen Haltevorrichtung;
- Fig. 3: eine Ansicht auf ein Klauenelement gemäss dem ersten Ausführungsbeispiel der erfindungsgemässen Haltevorrichtung;
- Fig. 4: einen Schnitt des Klauenelements der Fig. 3 entlang der Schnittlinie IV-IV;
- Fig. 5: eine Ansicht auf ein Niederhalteelement gemäss dem ersten Ausführungsbeispiel der erfindungsgemässen Haltevorrichtung;
- Fig. 6: einen Schnitt des Niederhalteelements der Fig. 5 entlang der Schnittlinie VI-VI;
- Fig. 7: eine Ansicht auf ein zweites Ausführungsbeispiel eines Niederhalteelements;
- Fig. 8: eine Ansicht auf ein Klauenelement für ein drittes Ausführungsbeispiel der erfindungsgemässen Haltevorrichtung;
- Fig. 9: eine Ansicht auf ein Niederhalteelement für das dritte Ausführungsbeispiel der erfindungsgemässen Haltevorrichtung;
- Fig. 10: eine Ansicht auf eine Variante eines Niederhalteelements;
- Fig. 11: eine Ansicht auf eine weitere Variante eines Niederhalteelements;
- Fig. 12: eine perspektivische Ansicht auf eine dritte Variante eines Niederhalteelements;
- Fig. 13: eine Ansicht eines Befestigungselements; und
- Fig. 14: eine Ansicht auf ein Hintergreifteil des Befestigungselements.

Grundsätzlich sind in den Figuren gleiche Teile mit den gleichen Bezugszeichen versehen.

### Wege zur Ausführung der Erfindung

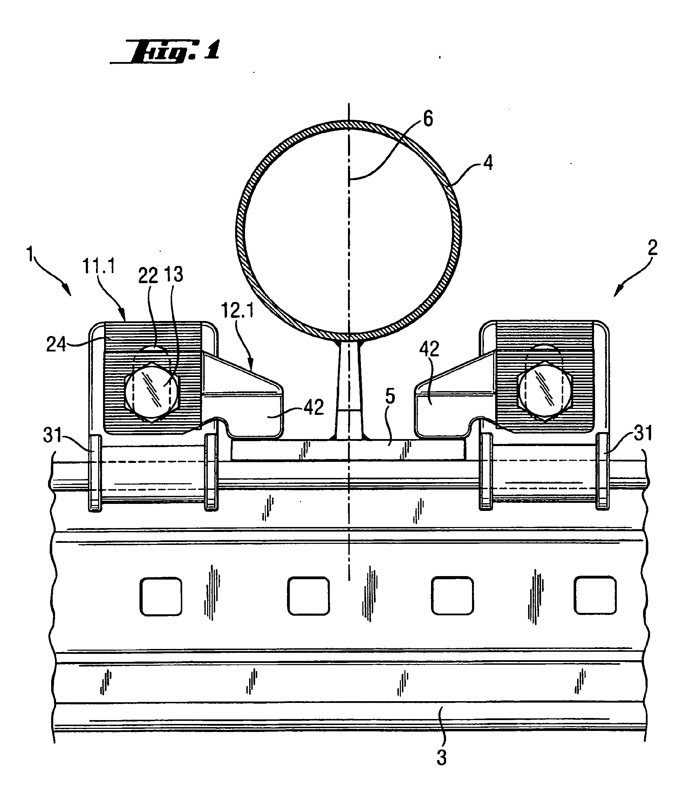

In den Fig. 1 bis 6 ist ein erstes Ausführungsbeispiel der erfindungsgemässen Haltevorrichtung und deren einzelnen Bestandteile beschrieben. Fig. 1 zeigt eine Längsansicht auf einen Träger mit der montierten, erfindungsgemässen Haltevorrichtung. Die Haltevorrichtungen 1 und 2 sind am Träger 3 zur Halterung der Rohrleitung 4 angeordnet, die mit ihrer Auflageplatte 5 auf dem Träger 3 aufgelagert ist. Der dargestellte Träger 3 ist ein Systemträger für ein Montagesystem. Die Haltevorrichtungen 1 und 2 können auch an einem Standardprofil angeordnet werden.

Die Haltevorrichtungen 1 und 2 sind identisch ausgebildet und unterscheiden sich nur in der, bezogen auf die Rohrachse 6, spiegelbildlichen Anordnung. Nachfolgend wird - stellvertretend für beide Haltevorrichtungen 1 und 2 - die, in dieser Darstellung links angeordnete Haltevorrichtung 1 beschrieben.

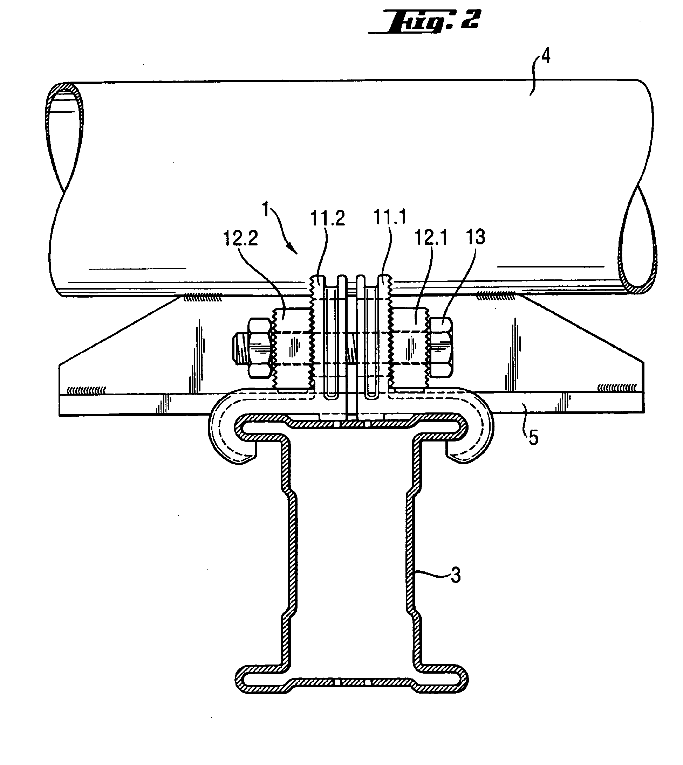

In Fig. 2 ist ein Querschnitt durch den Träger mit dem Ausführungsbeispiel der erfindungsgemässen Haltevorrichtung gezeigt. Die Haltevorrichtung 1 umfasst zwei Klauenelemente 11.1 und 11.2 und zwei Niederhalteelemente 12.1 und 12.2, die mit einer gemeinsamen Befestigungsschraube 13 an der oberen Auflagefläche am Träger 3 befestigt sind.

Eine Ansicht auf ein Klauenelement gemäss dem ersten Ausführungsbeispiel der erfindungsgemässen Haltevorrichtung ist in der Fig. 3 dargestellt. Das Klauenelement 11.1 weist an seinem Flanschabschnitt 21 ein in dessen Längsrichtung verlaufendes Langloch 22 auf, in welchem das Niederhalteelement entlang der Achse 23 in der Höhe verschoben werden kann. Die Länge des Langlochs ergibt sich aus der Summe aus der Länge des erforderlichen, beziehungsweise des gewünschten Verstellwegs und des Schraubendurchmessers. Die Breite des Langlochs 22 ist vom Schraubendurchmesser abhängig. Als Befestigungsschraube wird bei der gezeigten Ausführungsform eine M12-Schraube verwendet. Das Langloch 22 hat die Abmessungen 13 mm x 28 mm, was einen Verstellweg von 16 mm ergibt, entlang dem die Niederhalteelemente 12.1 und 12.2 in der Höhe positioniert werden können. Das, im montierten Zustand des Klauenelements 11.1, dem Träger zugewandte Ende 25 des Langlochs 22 gibt die unterste Stellung des an diesem Klauenelement 11.1 angeordneten Niederhalteelements vor. In Abhängigkeit der geometrischen Form und den gewählten Abmessungen des Niederhalteelements sowie dem gewünschten Spaltmass ergibt sich die minimale Dicke der Auflageplatte, die mit dieser Haltevorrichtung am Träger gehalten werden kann.

An dem, das Langloch 22 umgebenden Flächenbereich sind die Rastmittel 24 ausgebildet, in die Gegenrastmittel des Niederhalteelements 12.1 in Eingriff bringbar sind. Die Rastmittel 24, wie auch die Gegenrastmittel sind beispielsweise als Prismenzahnung ausgebildet und weisen in diesem Ausführungsbeispiel eine Zahnteilung t von 2.0 mm auf. Mit der Kombination von als Langloch 22 ausgebildeten Öffnung des Klauenelements 12.1 und den miteinander in Eingriff bringbaren Rast- und Gegenrastmitteln kann das Niederhalteelement 11.1 schrittweise in einem Raster beispielsweise von 4.0 mm entlang des Flanschabschnitts 21 verschoben werden. Diese Ausbildung deckt die in der Praxis üblicherweise benötigten Rastermasse ab.

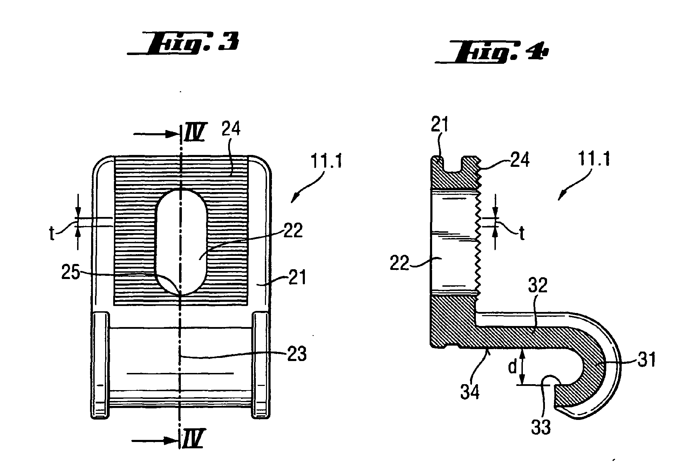

In Fig. 4 ist ein Schnitt des Klauenelements der Fig. 3 entlang der Schnittlinie IV-IV dargestellt. Das Klauenelement 11.1 hat einen Klauenteil 31, der den Flanschrand des Trägers umgreift. Der Klauenteil 31 ist hakenähnlich ausgebildet und hat in diesem Ausführungsbeispiel einen Halbkreis-Querschnitt. An den Klauenteil 31 schliesst der Auflageteil 32 an. Das Klauenelement 11.1 liegt mit dem Auflageteil 32 auf der Auflagefläche des Trägers auf, an der die Haltevorrichtung 1 vorgesehen ist. Der Abstand d zwischen der inneren Kante 33 des freien Endes des Klauenteils 31 und der Auflagefläche 34 des Auflageteils 32 gibt die maximale Flanschdicke des Trägers an, an den das Klauenelement 11.1 angeordnet werden kann. Mit der nachfolgend noch beschriebenen Ausführung des Befestigungselements kann das Klauenelement 11.1 auch an Trägern befestigt werden, deren Flanschdicke kleiner als der Abstand d ist. An dem, dem Klauenteil 31 abgewandten Ende des Auflageteils 32 ist, senkrecht zum Auflageteil 32 der Flanschabschnitt 21 mit dem Langloch 22 und dem Rastmittel 24 angeordnet.

Fig. 5 zeigt eine Ansicht auf ein Niederhalteelement gemäss dem ersten Ausführungsbeispiel der erfindungsgemässen Haltevorrichtung. Das Niederhalteelement 12.1 weist einen im Wesentlichen rechteckigen Anschlussteil 41 und einen nach unten, in Richtung der Trägeroberfläche ragenden Niederhalteteil 42 auf. Etwa im Zentrum des Anschlussteils ist eine Durchgangsöffnung als Bohrung 43 ausgebildet. Im Bereich der Kontaktfläche beispielsweise mit dem Flanschabschnitt 21 des Klauenelements 11.1 sind die Gegenrastmittel 44 angeordnet, die z. B. mit den Rastmitteln 24 an dem Flanschabschnitt 21 in Eingriff bringbar sind.

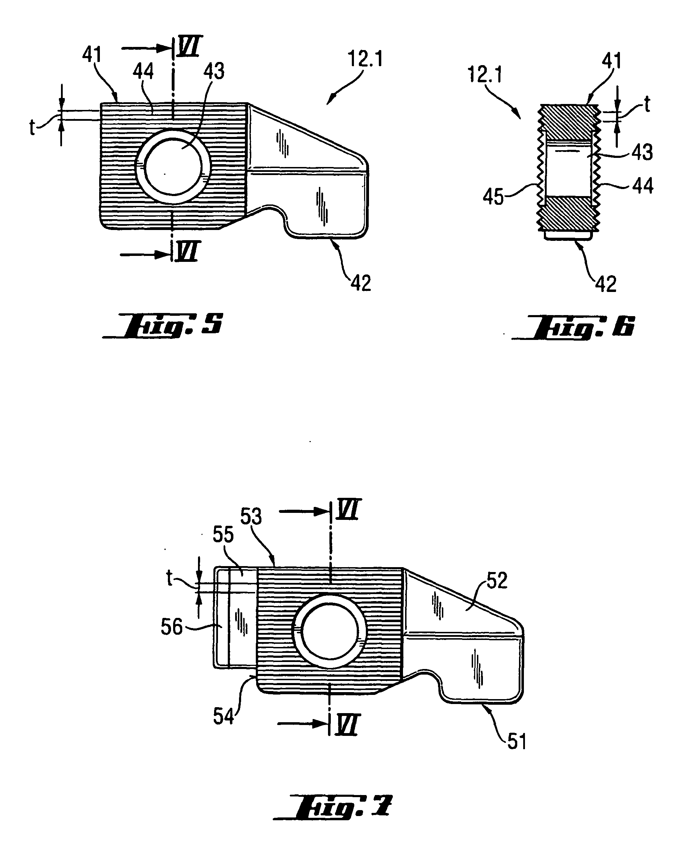

Einen Schnitt des Niederhalteelements der Fig. 5 entlang der Schnittlinie Vl-Vl ist in Fig. 6 gezeigt. Der Anschlussteil 41 weist beidseitig Rast- beziehungsweise Gegenrastmittel 44 und 45 auf. Mit dieser Ausgestaltung kann einerseits das Niederhalteelement 12.1 für eine links- sowie rechtsseitige Montage am Klauenelement, z. B. am Klauenelement 11.1, angeordnet werden. An der zweiten, mit Rastmittel versehenen Seite kann ein, ebenfalls mit einer Zahnung versehenes Hintergreifteil des Befestigungsmittels eingreifen.

Fig. 7 zeigt eine Ansicht auf ein zweites Ausführungsbeispiel eines Niederhalteelements. Das Niederhalteelement 51 ist im Wesentlichen gleich wie das Niederhalteelement 12.1 ausgebildet, wobei das Niederhalteelement 51 zusätzlich an der, dem Niederhalteteil 52 abgewandten Seite 54 des Anschlussteils 53, einen T-förmigen Vorsprung 55 ausgeformt hat. Der Flansch 56 des T-förmigen Vorsprungs 55 liegt vorzugsweise an einer Aussenseite des Flanschabschnitts des Klauenelements an, an den das Niederhalteelement 51 angeordnet wird. Bei der Positionierung des Niederhalteelements 51 entlang des entsprechenden Klauenelements ist mit dem T-förmigen Vorsprung 55 eine Führung des Niederhalteelements 51 gegeben. Der Querschnitt des Anschlussteils 53 entspricht dem in Fig. 6 gezeigten Querschnitt des Anschlussteils 41, was mit der in Fig. 5 und 7 gleichbenannten Schnittlinie VI - VI dargestellt ist.

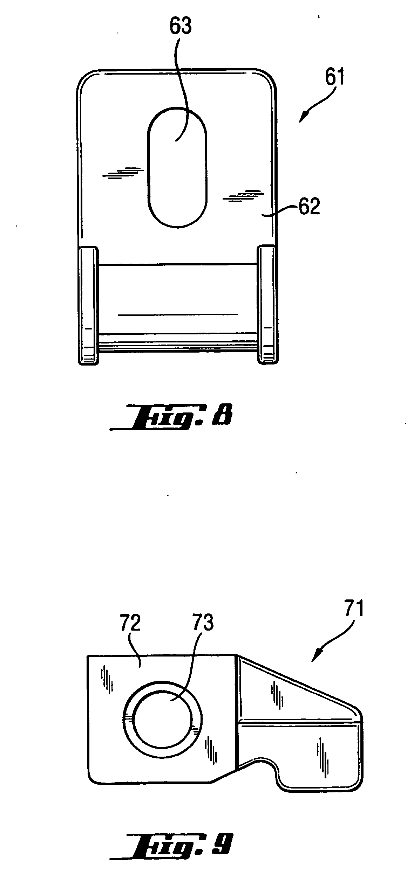

Eine Ansicht auf ein Klauenelement für ein drittes Ausführungsbeispiel der erfindungsgemässen Haltevorrichtung ist in Fig. 8 dargestellt. Das Klauenelement 61 weist im Wesentlichen die gleiche Ausgestaltung wie das in Fig. 3 und 4 beschriebene Klauenelement 11.1 auf. Im Unterschied zu dem Klauenelement 11.1 sind am Flanschabschnitt 62 im Bereich um das Langloch 63 keine Rastmittel vorgesehen.

In Fig. 9 ist eine Ansicht auf ein Niederhalteelement für das dritte Ausführungsbeispiel der erfindungsgemässen Haltevorrichtung gezeigt. Das Niederhalteelement 71 ist im Wesentlichen gleich wie das in Fig. 5 und 6 beschriebene Niederhalteelement 12.1 ausgebildet. Im Unterschied zu dem Niederhalteelement 12.1 sind am Anschlussteil 72 im Bereich um die Bohrung 73 keine Rastmittel vorgesehen. Bei dieser Ausführungsform wird auf beiden, in der Achse der Bohrung 73 liegenden Aussenseiten des Anschlussteils 72 auf Rast- beziehungsweise Gegenrastmittel verzichtet. Durch die Verspannung mittels eines Befestigungsmittels wird eine kraftschlüssige Verbindung geschaffen.

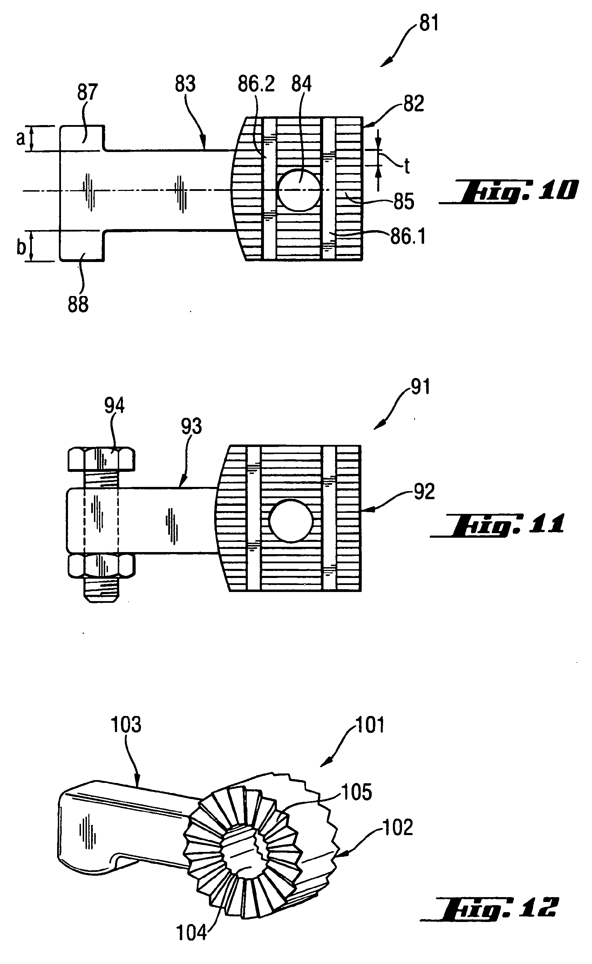

Fig. 10 zeigt eine Ansicht auf eine Variante eines Niederhalteelements. Das Niederhalteelement 81 umfasst wie die zuvor beschriebenen Ausführungsformen der Niederhalteelemente einen Anschlussteil 82 und einen Niederhalteteil 83. Der Anschlussteil 82 weist eine Bohrung 84 für die Durchführung des Befestigungsmittels auf. Vorzugsweise auf beiden, in der Achse der Bohrung 84 liegenden Seitenflächen des Anschlussteils 82 sind Rast- beziehungsweise Gegenrastmittel 85 angeordnet, die mit Rast- beziehungsweise Gegenrastmittel eines Klauenelements, beziehungsweise einer Hintergreifplatte in Eingriff bringbar sind und im verspannten Zustand des Befestigungsmittels die formschlüssige Verbindung der einzelnen Teile der Haltevorrichtung untereinander gewährleisten. Zusätzlich weist der Anschlussteil 82 an diesen beiden Seitenflächen Führungsnuten 86.1 und 86.2 auf, in die entsprechend diesen Führungsnuten 86.1 und 86.2 ausgebildete Führungsstege eines Klauenelements eingreifen können. Mit dieser ausgebildeten Führung ist die Ausrichtung des Niederhalteelements 81 bei der Justierung auf die gewünschte Höhe gegeben.

Der Niederhalteteil 83 weist in dieser Ansicht eine im Wesentlichen T-förmige Ausgestaltung auf, wobei der eine, über das Niederhalteteil 83 vorstehende Schenkel 87 kleiner als der andere, über das Niederhalteteil 83 vorstehende Schenkel 88 ausgebildet ist. Der Überstand a des Schenkels 87 beträgt die Hälfte des Überstandes b des Schenkels 88. Die Differenz zwischen dem Überstand a und dem Überstand b entspricht vorzugsweise der halben Zahnteilung, beziehungsweise dem halben Rasterabstand der Zahnung des Rastmittels 85. In Abhängigkeit der Anordnung (d. h. Schenkel 87 oder Schenkel 88 der zu fixierenden Auflageplatte zugewandt) kann das Rastermass des Rastmittels 85 halbiert werden.

Eine Ansicht auf eine weitere Variante eines Niederhalteelements ist in der Fig. 11 dargestellt. Das Niederhalteelement 91 umfasst einen Anschlussteil 92 und einen Niederhalteteil 93. Der Anschlussteil 92 entspricht in seiner Ausgestaltung dem Anschlussteil 82 des Niederhalteelements 81. Senkrecht zur Längsausdehnung des Niederhalteteils 93 ist eine Durchgangsöffnung angeordnet, die beispielsweise ein Innengewinde aufweist. In diesem Innengewinde ist die Einstellschraube 94 vorgesehen. Nachdem das Niederhalteelement 91 an dem Klauenelement positioniert wurde, kann durch Drehen der Einstellschraube 94 die gewünschte Position zum Niederhalten der zu fixierenden Auflageplatte eingestellt werden.

Fig. 12 stellt eine perspektivische Ansicht auf eine dritte Variante eines Niederhalteelements dar. Auch das Niederhalteelement 101 umfasst ein Anschlussteil 102 und einen Niederhalteteil 103. Im Anschlussteil 102 ist die Bohrung 104 zur Durchführung des Befestigungsmittels angeordnet. An den in Richtung der Bohrungsachse liegenden Seitenflächen des Anschlussteils 102 sind die Rast- beziehungsweise Gegenrastmittel 105 vorgesehen, die vom Rand der Bohrung 104 strahlenförmig nach aussen verlaufen. Das Klauenelement zur Anordnung des Niederhalteelements 101 weist im Gegensatz zu den bisher beschriebenen Ausführungsformen des Klauenelements anstelle eines Langlochs eine Bohrung auf, durch die das Befestigungsmittel hindurchführbar ist. Auch am Klauenelement sowie an dem allfällig angeordneten Hintergreifteil verlaufen die Rast- beziehungsweise Gegenrastmittel von dem vorhandenen Zentrum strahlenförmig nach aussen, so dass diese mit den Rast- beziehungsweise Gegenrastmitteln 105 am Anschlussteil 102 in Eingriff bringbar sind. Mittels Drehen des Niederhalteelements 101 um die Achse des Befestigungsmittels wird die gewünschte Höhe des Niederhalteteils 103 eingestellt, so dass die zu fixierende Auflageplatte gehalten ist.

In der Fig. 13 ist eine Ansicht eines Befestigungselements gezeigt. Das Befestigungselement 111 umfasst eine Gewindestange 112, die an deren Enden jeweils ein Hintergreifteil 113.1 und 113.2 angeordnet ist und jeweils einen Gewindeabschnitt 114.1 und 114.2 aufweist. An den Enden ist jeweils eine Mutter 115.1 und 115.2 vorgesehen, mittels derer das Befestigungselement verspannt werden kann. Zwischen der Mutter 115.1 und dem Hintergreifteil 113.1 sowie zwischen der Mutter 115.2 und dem Hintergreifteil 113.2 ist je ein, eine Blattfeder umfassendes, Federelement 116.1 bzw. 116.2 vorgesehen. Die Gewindestange 112 weist einen mit Planflächen versehenen Führungsabschnitt 127 auf, der durch dessen Ausgestaltung ein Verdrehen des Befestigungselements 111 in der Bohrung 121.2 und im Langloch 120.2 bei der Verspannung des Befestigungselements 111 ohne die Verwendung eines Gegenhaltemittels verhindert.

Die Haltevorrichtung 117 umfasst zwei Klauenelemente, deren Flanschabschnitte 118.1 und 118.2 im Schnitt dargestellt sind, sowie die Niederhalteelemente 119.1 und 119.2. Durch das Langloch 120.1 und 120.2 in dem Flanschabschnitt 118.1, bzw. 118.2 und der Bohrung 121.1, bzw. 121.2 in dem Niederhalteelement 119.1, bzw. 119.2 ist das Befestigungselement 111 geführt, das die einzelnen Teile der Haltevorrichtung 117 im vormontierten Zustand miteinander verbindet. Der Flanschabschnitt 118.1, bzw. 118.2 weist ein als Zahnung ausgebildetes Rastmittel 122.1, bzw. 122.2 auf, in das ein an dem Niederhalteelement 119.1, bzw. 119.2 angeordnetes Gegenrastmittel 123.1, bzw. 123.2 in Eingriff bringbar ist. An der, mit dem Gegenrastmittel 123.1, bzw. 123.2 versehenen Seite, gegenüberliegenden Seite des Niederhalteelements 119.1, bzw. 119.2 ist ein Rastmittel 125.1, bzw. 125.2 ausgebildet, das vorzugsweise in der Geometrie analog dem Gegenrastmittel 123.1, bzw. 123.2 ausgebildet ist. In das Rastmittel 125.1, bzw. 125.2 ist das Gegenrastmittel 126.1, bzw. 126.2 des Hintergreifteils 113.1, bzw. 113.2 in Eingriff bringbar. Durch das Ineinandergreifen der einzelnen Rast- und Gegenrastmittel sind die einzelnen Teile der Haltevorrichtung im zusammengesetzten Zustand formschlüssig miteinander verbunden.

Die Haltevorrichtung 117 wird zur Montage am Träger gegen die Federwirkung der Federelemente 116.1 und 116.2 auseinandergezogen, so dass die freien Enden der Klauenteile der Klauenelemente über den Flanschrand 127.1 und 127.2 gestülpt werden können. Durch Loslassen der Haltevorrichtung 117 schnappt diese am Träger ein. Die Haltevorrichtung kann entlang dem Träger in Richtung der Trägerachse 124 positioniert werden. Wenn der Federweg eines Federelements genügend gross gewählt ist, kann auf die Anordnung des zweiten Federelements 116.2 verzichtet werden. Durch Zug und Druck auf die Gewindestange 112 wird die formschlüssige Verbindung zwischen dem Flanschabschnitt 118.1 und dem Niederhalteelement 119.1 sowie zwischen dem Flanschabschnitt 118.2 und dem Niederhalteelement 119.2 gelöst und die Niederhalteelemente 119.1 und 119.2 können senkrecht zum Träger in der Höhe positioniert werden. Befinden sich die einzelnen Teile in der gewünschten Position, wird das Befestigungselement 111 verspannt und die einzelnen Teile der Haltevorrichtung 117 sind form- und kraftschlüssig fixiert.

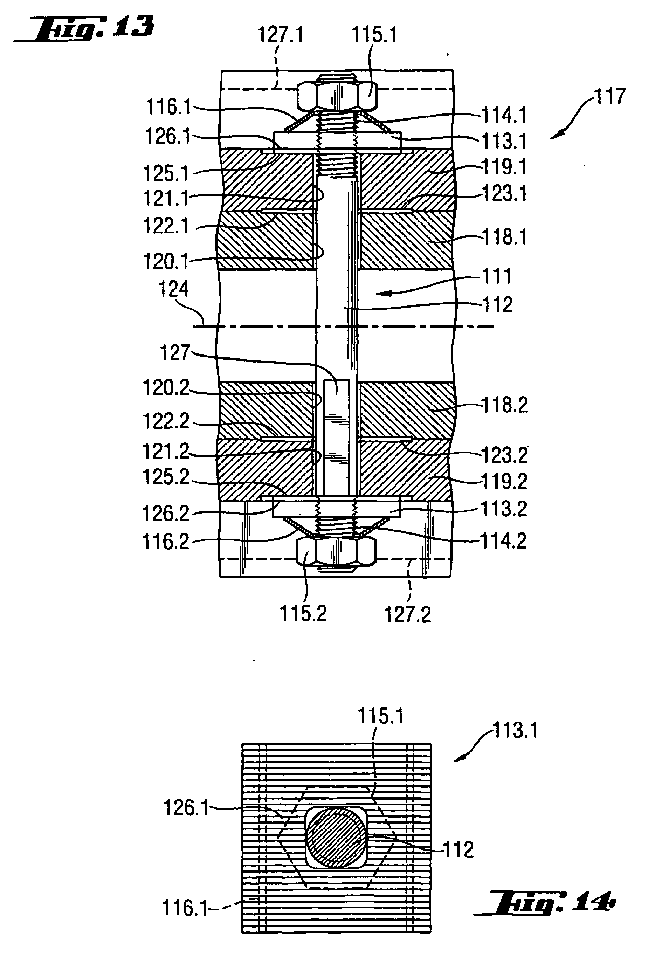

Eine Ansicht auf ein Hintergreifteil des Befestigungselements ist in der Fig. 14 dargestellt. Das Hintergreifteil 113.1 hat eine rechtwinklige Ausgestaltung und ist an der Gewindestange 112 angeordnet. An der Kontaktfläche des Hintergreifteils 113.1 mit dem Niederhalteelement 119.1 sind die Gegenrastmittel 126.1 ausgebildet, die in die Rastmittel 125.1 des Niederhalteelements 119.1 eingreifen.

Zusammenfassend ist festzustellen, dass eine Haltevorrichtung für die Befestigung von Leitungsstrang-Schuhelementen auf einem Träger geschaffen wurde, die für eine Vielzahl von unterschiedlichen Ausführungen von Auflageplatten von Leitungsstrang-Schuhelementen verwendet werden kann. An ein und demselben Klauenelement können verschieden ausgestaltete Niederhalteelemente angeordnet werden. Die erfindungsgemässe Haltevorrichtung ist einfach herstellbar sowie montierbar.

## Patentansprüche

1. Haltevorrichtung für die Befestigung eines Leitungsstrang-Schuhelements mit einer Auflageplatte für Leitungsstrang-Installationen, wie Installationen von Rohrleitungen (4) und dergleichen, auf einem Träger, insbesondere auf einem Systemträger (3) eines Montagesystems, wobei die Haltevorrichtung (1, 2; 117) zumindest zwei Klauenelemente (11.1, 11.2; 61), Niederhalteelemente (12.1, 12.2; 51; 71; 81; 91; 101; 119.1, 119.2) und zumindest ein Befestigungsmittel (13; 111) umfasst, wobei
jedes Klauenelement (11.1, 11.2; 61) ein Klauenteil (31) zum Umgreifen eines Trägerrandes (127.1, 127.2), ein, an das Klauenteil (31) angrenzendes, Auflageteil (32) zur Auflage des Klauenelements (11.1, 11.2; 61) auf einer der Aussenseiten des Trägers (3) und einen, im Wesentlichen senkrecht zum Auflageteil (32) ausgerichteten, Flanschabschnitt (21; 62; 118.1, 118.2) umfasst, der eine Öffnung zur Fixierung der Klauenelemente (11.1, 11.2; 61) am Träger (3) mittels des Befestigungsmittels (13; 111) aufweist, und wobei
die Niederhalteelemente (12.1, 12.2; 51; 71; 81; 91; 101; 119.1, 119.2) als separate Teile ausgebildet sind und jeweils ein Niederhalteteil (42; 52; 83; 93; 103) aufweisen, und wobei
die Niederhalteelemente (12.1, 12.2; 51; 71; 81; 91; 101; 119.1, 119.2) an den Flanschabschnitten (21; 62; 118.1, 118.2) der Klauenelemente (11.1, 11.2; 61) zum Niederhalten der Auflageplatte (5) auf eine der Aussenseiten des Trägers (3) angeordnet sind, **dadurch gekennzeichnet, dass**
die Niederhalteelemente (12.1, 12.2; 51; 71; 81; 91; 101; 119.1, 119.2) über zumindest ein Befestigungsmittel an den Flanschabschnitten (21; 62; 118.1, 118.2) der Klauenelemente (11.1, 11.2; 61) gehalten sind, wobei
der Niederhalteteil (42; 52; 83; 93; 103) jedes Niederhalteelements (12.1, 12.2; 51; 71; 81; 91; 101; 119.1, 119.2) im Abstand zur Aussenseite des Trägers (3) einstellbar ist.

2. Haltevorrichtung nach Anspruch 1, **dadurch gekennzeichnet, dass** jedes Niederhalteelement (51; 81; 91) ein Führungsmittel (55; 86.1, 86.2) zur Führung des Niederhalteelements (51; 81; 91) an den Flanschabschnitten der Klauenelemente umfasst.

3. Haltevorrichtung nach Anspruch 1 oder 2, **dadurch gekennzeichnet, dass** die Flanschabschnitte (21; 118.1, 118.2) der Klauenelemente (11.1, 11.2) Rastmittel (24; 122.1, 122.2) und jedes Niederhalteelement (12.1, 12.2; 51; 71; 81; 91; 101; 119.1, 119.2) Gegenrastmittel (44; 53; 123.1, 123.2) umfassen, die im montierten Zustand miteinander in Eingriff stehen.

4. Haltevorrichtung nach Anspruch 3, **dadurch gekennzeichnet, dass** die Rastmittel (24; 122.1, 122.2) und/oder die Gegenrastmittel (44; 53; 123.1, 123.2) eine Zahnung umfassen, wobei die Zahnteilung der Zahnung vorzugsweise 2.0 mm beträgt.

5. Haltevorrichtung nach einem der Ansprüche 1 bis 4, **dadurch gekennzeichnet, dass** die Niederhalteelemente (12.1 , 12.2; 51; 71; 81; 91; 101; 119.1, 119.2) jeweils eine Öffnung (43; 73; 84; 104; 121.1, 121.2) zur Fixierung der Niederhalteelemente (12.1, 12.2; 51; 71; 81; 91; 101; 119.1, 119.2) mittels Befestigungsmittel (13; 111) an den Flanschabschnitten (21; 62; 118.1, 118.2) aufweisen, wobei zur Fixierung der zumindest zwei Klauenelemente (11.1, 11.2; 61) am Träger (3) und der Niederhalteelemente (12.1, 12.2; 51; 71; 81; 91; 101; 119.1, 119.2) jeweils an einem der Flanschabschnitte (21; 62; 118.1, 118.2) der Klauenelemente (11.1, 11.2; 61) ein Befestigungsmittel, optional ein Schraubmittel (13; 111), vorgesehen ist.

6. Haltevorrichtung nach einem der Ansprüche 1 bis 5, **dadurch gekennzeichnet, dass** die Flanschabschnitte (21; 62; 118.1, 118.2) der klauenelemente oder die Niederhalteelemente (12.1, 12.2; 51; 71; 81; 91; 101; 119.1, 119.2) zumindest ein Langloch (22; 63; 120.1, 120.2) aufweist, wobei das Langloch (22; 63; 120.1, 120.2) im vormontierten Zustand der Haltevorrichtung (152; 117) senkrecht zum Auflageteil (32) des Klauenelements (11.1, 11.2; 61) verlauft.

7. Haltevorrichtung nach Anspruch 6, **dadurch gekennzeichnet, dass** ein Flächenbereich, der das zumindest eine Langloch (22; 120.1, 120.2) umgibt, Rastmittel (24; 122.1, 122.2) aufweist, wobei die Rastmittel (24; 122.1, 122.2) parallel zueinander, quer zum zumindest einen Langloch (22; 120.1, 120.2) verlaufen.

8. Haltevorrichtung nach Anspruch 3, **dadurch gekennzeichnet, dass** die Niederhalteelemente (12.1, 12.2; 51; 81; 91; 101; 119.1, 119.2) zusätzlich Rastmittel (45; 125.1, 125.2) umfassen, wobei die Rastmittel (45; 125.1, 125.2) auf der Seite des Niederhalteelements (12.1, 12.2; 51; 81; 91; 101; 119.1, 119.2) vorgesehen sind, die der Seite mit dem Gegenrastmittel (44; 53; 123.1, 123.2) des Niederhalteelements (12.1, 12.2; 51; 81; 91; 101; 119.1, 119.2) gegenüberliegt.

9. Haltevorrichtung nach einem der Ansprüche 1 bis 8, **dadurch gekennzeichnet, dass** das Befestigungselement (111) zur Fixierung der Haltevorrichtung (117) an einem Träger ein Schraubmittel (112) mit zumindest einem Hintergreifteil (113.1, 113.2) umfasst, wobei das Hintergreifteil (113.1, 113.2) ein Gegenrastmittel (126.1, 126.2) aufweist, wobei das Gegenrastmittel (126.1, 126.2) optional eine Zahnung umfasst.

10. Haltevorrichtung nach einem der Ansprüche 1 bis 9, **dadurch gekennzeichnet, dass** das Befestigungselement (111) federbeaufschlagt ist zur Erzeugung einer Vorspannung auf die zu verbindenden Teile der Haltevorrichtung.

## Claims

1. Retaining device for fastening a shoe element of a conduit line with a supporting plate for conduit line installations, for example, installations of pipelines (4) and the like, on a support, in particular a system support (3) of an assembly system, wherein the retaining device (1, 2; 117) comprises at least two claw elements (11.1, 11.2; 61), hold-down elements (12.1, 12.2; 51; 71; 81; 91; 101; 119.1, 119.2) and at least one fastening means (13; 111), wherein each claw element (11.1, 11.2; 61) comprises a claw member (31) for grasping a support edge (127.1, 127.2), a supporting member (32) adjoining the claw member (31) for supporting the claw element (11.1, 11.2; 61) on one of the external sides of the support (3) and a flange section (21; 62; 118.1, 118.2) oriented substantially perpendicular to the supporting member (32), said flange section having an opening for fixing the claw elements (11.1, 11.2; 61) to the support (3) by means of the fastening means (13; 111), and wherein the hold-down elements (12.1, 12.2; 51; 71; 81; 91; 101; 119.1, 119.2) are designed as separate parts and each have a hold-down member (42; 52; 83; 93; 103), and wherein the hold-down elements (12.1, 12.2; 51; 71; 81; 91; 101; 119.1, 119.2) are arranged on the flange sections (21; 62; 118.1, 118.2) of the claw elements (11.1, 11.2; 61) for holding down the supporting plate (5) on one of the external sides of the support (3), **characterised in that** the hold-down elements (12.1, 12.2; 51; 71; 81; 91; 101; 119.1, 119.2) are held by means of at least one fastening means on the flange sections (21; 62; 118.1, 118.2) of the claw elements (11.1, 11.2; 61), wherein the hold-down member (42; 52; 83; 93; 103) of each hold-down element (12.1, 12.2; 51; 71; 81; 91; 101; 119.1, 119.2) can be adjustably set at a distance from the external side of the support (3).

2. Retaining device according to claim 1, **characterised in that** each hold-down element (51; 81; 91) comprises a guiding means (55; 86.1, 86.2) for guiding the hold-down element (51; 81; 91) on the flange sections of the claw elements.

3. Retaining device according to claim 1 or 2, **characterised in that** the flange sections (21; 118.1, 118.2) of the claw elements (11.1, 11.2) comprise detent means (24; 122.1, 122.2) and each hold-down element (12.1, 12.2; 51; 71; 81; 91; 101; 119.1, 119.2) comprises counter-detent means (44; 53; 123.1, 123.2), which are in mutual engagement in the assembled condition.

4. Retaining device according to claim 3, **characterised in that** the detent means (24; 122.1, 122.2) and/or the counter-detent means (44; 53; 123.1, 123.2) comprise toothing, wherein the spacing of the toothing is preferably 2.0 mm.

5. Retaining device according to one of the claims 1 to 4, **characterised in that** the hold-down elements (12.1, 12.2; 51; 71; 81; 91; 101; 119.1, 119.2) each have an opening (43; 73; 84; 104; 121.1, 121.2) for fixing the hold-down elements (12.1, 12.2; 51; 71; 81; 91; 101; 119.1, 119.2) by means of fastening means (13; 111) on the flange sections (21; 62; 118.1, 118.2), wherein for fixing the at least two claw elements (11.1, 11.2; 61) on the support (3) and the hold-down elements (12.1, 12.2; 51; 71; 81; 91; 101; 119.1, 119.2), a fastening means, optionally a screw means (13; 111), is provided in each case, on one of the flange sections (21; 62; 118.1, 118.2) of the claw elements (11.1, 11.2; 61).

6. Retaining device according to one of the claims 1 to 5, **characterised in that** the flange sections (21; 62; 118.1, 118.2) of the claw elements or the hold-down elements (12.1, 12.2; 51; 71; 81; 91; 101; 119.1, 119.2) have at least one slot (22; 63; 120.1, 120.2), wherein in the preassembled condition of the retaining device (1, 2; 117), the slot (22; 63; 120.1, 120.2) runs perpendicularly to the supporting member (32) of the claw element (11.1, 11.2; 61).

7. Retaining device according to claim 6, **characterised in that** a surface region which surrounds at least one slot (22; 120.1, 120.2) has detent means (24; 122.1, 122.2) wherein the latching means (24; 122.1, 122.2) run mutually parallel, transversely to the at least one slot (22; 120.1, 120.2).

8. Retaining device according to claim 3, **characterised in that** the hold-down elements (12.1, 12.2; 51; 81; 91; 101; 119.1, 119.2) also comprise detent means (45; 125.1, 125.2), wherein the detent means (45, 125.1, 125.2) are provided on the side of the hold-down element (12.1, 12.2; 51; 81; 91; 101; 119.1, 119.2) which lies opposing the side having the counter-detent means (44; 53; 123.1, 123.2) of the hold-down element (12.1, 12.2; 51; 81; 91; 101; 119.1, 119.2).

9. Retaining device according to one of the claims 1 to 8, **characterised in that** the fastening element (111) for fixing the retaining device (117) to a support comprises a screw means (112) with at least one reverse engagement member (113.1, 113.2), wherein the reverse engagement member (113.1, 113.2) has a counter-detent means (126.1, 126.2), wherein the counter-detent means (126.1, 126.2) optionally has toothing.

10. Retaining device according to one of the claims 1 to 9, **characterised in that** the fastening element (111) is spring loaded to generate a pre-tension on the parts of the retaining device to be connected.

## Revendications

1. Dispositif de retenue pour la fixation d'un élément de sabot de canalisation avec une plaque d'appui pour des installations de canalisations, telles que des installations de conduites tubulaires (4) et analogues, sur un support, en particulier sur un support de système (3) d'un système de montage, le dispositif de retenue (1, 2 ; 117) comprenant au moins deux éléments formant griffes (11.1, 11.2 ; 61), des éléments presseurs (12.1, 12.2 ; 51 ; 71 ; 81 ; 91 ; 101 ; 119.1, 119.2) et au moins un moyen de fixation (13 ; 111), chaque élément formant griffe (11.1, 11.2 ; 61) comprenant une partie de griffe (31) pour enserrer un bord de support (127.1, 127.2), une partie d'appui (32) adjacente à la partie de griffe (31) pour appuyer l'élément formant griffe (11.1, 11.2 ; 61) sur un des côtés extérieurs du support (3), et une partie de bride (21 ; 62 ; 118.1, 118.2) orientée sensiblement perpendiculairement à la partie d'appui (32) et pourvue d'une ouverture pour la fixation des éléments formant griffes (11.1, 11.2 ; 61) au support (3) au moyen du moyen de fixation (13 ; 111), les éléments presseurs (12.1, 12.2 ; 51 ; 71 ; 81 ; 91 ; 101 ; 119.1, 119.2) étant conformés en pièces séparées et comportant chacun une partie presseuse (42 ; 52 ; 83 ; 93 ; 103), et les éléments presseurs (12.1, 12.2 ; 51 ; 71 ; 81 ; 91 ; 101 ; 119.1, 119.2) étant disposés contre les portions de brides (21 ; 62 ; 118.1, 118.2) des éléments formant griffes (11.1, 11.2 ; 61) pour presser la plaque d'appui (5) contre un des côtés extérieurs du support (3), **caractérisé en ce que** les éléments presseurs (12.1, 12.2 ; 51 ; 71 ; 81 ; 91 ; 101 ; 119.1, 119.2) sont maintenus contre les portions de brides (21 ; 62 ; 118.1, 118.2) des éléments formant griffes (11.1, 11.2 ; 61) par l'intermédiaire d'au moins un moyen de fixation, l'écartement de la partie presseuse (42 ; 52 ; 83 ; 93 ; 103) de chaque élément presseur (12.1, 12.2 ; 51 ; 71 ; 81 ; 91 ; 101 ; 119.1, 119.2) par rapport au côté extérieur du support (3) étant réglable.

2. Dispositif de retenue selon la revendication 1, **caractérisé en ce que** chaque élément presseur (51 ; 81 ; 91) comprend un moyen de guidage (55 ; 86.1, 86.2) pour guider l'élément presseur (51 ; 81 ; 91) contre les portions de brides des éléments formant griffes.

3. Dispositif de retenue selon la revendication 1 ou 2, **caractérisé en ce que** les portions de brides (21 ; 118.1, 118.2) des éléments formant griffes (11.1, 11.2) comportent des moyens d'encliquetage (24 ; 122.1, 122.2) et chaque élément presseur (12.1, 12.2 ; 51 ; 71; 81 ; 91; 101; 119.1, 119.2) comporte des moyens d'encliquetage antagonistes (44; 53; 123.1, 123.2), lesquels moyens sont en prise mutuelle en position montée.

4. Dispositif de retenue selon la revendication 3, **caractérisé en ce que** les moyens d'encliquetage (24 ; 122.1, 122.2) et/ou les moyens d'encliquetage antagonistes (44 ; 53 ; 123.1, 123.2) comprennent une denture, le pas de dents de la denture étant de préférence de 2.0 mm.

5. Dispositif de retenue selon une des revendications 1 à 4, **caractérisé en ce que** les éléments presseurs (12.1, 12.2 ; 51 ; 71 ; 81 ; 91 ; 101 ; 119.1, 119.2) sont chacun pourvus d'une ouverture (43 ; 73 ; 84 ; 104 ; 121.1, 121.2) pour fixer les éléments presseurs (12.1, 12.2 ; 51 ; 71 ; 81 ; 91 ; 101 ; 119.1, 119.2) à l'aide de moyens de fixation (13 ; 111) aux portions de brides (21 ; 62 ; 118.1, 118.2), un moyen de fixation, optionnellement un moyen de vissage (13 ; 111), étant prévu pour fixer les éléments formant griffes au nombre d'au moins deux (11.1, 11.2 ; 61) au support (3) et chacun des éléments presseurs (12.1, 12.2 ; 51 ; 71 ; 81 ; 91 ; 101 ; 119.1, 119.2) à une des portions de brides (21 ; 62 ; 118.1, 118.2) des éléments formant griffes (11.1, 11.2 ; 61).

6. Dispositif de retenue selon une des revendications 1 à 5, **caractérisé en ce que** les portions de brides (21 ; 62 ; 118.1, 118.2) des éléments formant griffes ou les éléments presseurs (12.1, 12.2 ; 51 ; 71 ; 81 ; 91 ; 101 ; 119.1, 119.2) sont pourvus d'au moins un trou oblong (22 ; 63 ; 120.1, 120.2), le trou oblong (22 ; 63 ; 120.1, 120.2) s'étendant perpendiculairement à la partie d'appui (32) de l'élément formant griffe (11.1, 11.2 ; 61) à l'état prémonté du dispositif de retenue (1, 2 ; 117).

7. Dispositif de retenue selon la revendication 6, **caractérisé en ce qu'**une zone de surface entourant le trou oblong au nombre d'au moins un (22 ; 120.1, 120.2) comporte des moyens d'encliquetage (24 ; 122.1, 122.2), les moyens d'encliquetage (24 ; 122.1, 122.2) s'étendant parallèlement l'un à l'autre, transversalement au trou oblong au nombre d'au moins un (22 ; 120.1, 120.2).

8. Dispositif de retenue selon la revendication 3, **caractérisé en ce que** les éléments presseurs (12.1, 12.2 ; 51 ; 81 ; 91 ; 101 ; 119.1, 119.2) comportent également des moyens d'encliquetage (45 ; 125.1, 125.2), les moyens d'encliquetage (45 ; 125.1, 125.2) se trouvant sur le côté de l'élément presseur (12.1, 12.2 ; 51 ; 81 ; 91 ; 101 ; 119.1, 119.2) qui est opposé au côté pourvu du moyen d'encliquetage antagoniste (44 ; 53 ; 123.1, 123.2) de l'élément presseur (12.1, 12.2 ; 51 ; 81 ; 91 ; 101 ; 119.1, 119.2).

9. Dispositif de retenue selon une des revendications 1 à 8, **caractérisé en ce que**, pour fixer le dispositif de retenue (117) à un support, l'élément de fixation (111) comporte un moyen de vissage (112) avec au moins une pièce de retenue arrière (113.1, 113.2), la pièce de retenue arrière (113.1, 113.2) comportant un moyen d'encliquetage antagoniste (126.1, 126.2), le moyen d'encliquetage antagoniste (126.1, 126.2) comprenant optionnellement une denture.

10. Dispositif de retenue selon une des revendications 1 à 9, **caractérisé en ce que** l'élément de fixation (111) est sollicité par ressort pour exercer une précontrainte sur les parties du dispositif de retenue à relier.
